# EUROPEAN PATENT APPLICATION

(11) **EP 1 973 043 A1**
(43) Date of publication of application: **24.09.2008**
(21) Application number: 06840589.3
(22) Date of filing: 19.12.2006
(51) Int. Cl.: G06F 17/21, G06F 17/30

(54) **METHOD FOR INSERTING AND PLAYING A SLIDE IN A FILE**

(30) Priority: 20.12.2005 CN 200510132635
(71) Applicant: Wuxi Evermore Software, Inc, Wuxi City, Jiangsu Province 214028 (CN)
(72) Inventor: PAN, Guojun, Jiangsu 214028 (CN); ZHAO, Hongsong, Jiangsu 214028 (CN); RONG, Mingjun, Jiangsu 214028 (CN)
(74) Representative: Price, Nigel John King
(86) International application number: PCT/CN2006/003492
(87) International publication number: WO 2007/071183

(57) **Abstract**

A method for inserting slides in a document is disclosed in the present invention. Whether the file selected to be inserted is a slide file; if the file is the slide file, a file type of the slide file is set. A file name, a file path, the file type and a file label array are extracted and stored in a memory, wherein, the file label array records orderly labels of chosen slides in the slide file. A slide object according to the file name, the file path, the file type and the labels in the file label array is constructed and inserted at a cursor position in the document. Additionally, a method for broadcasting slides is disclosed. The present invention realizes that the slide content is broadcast directly, and also realizes the broadcast characteristics such as animation and sound effect and so on. The operation is simple, time is saved, and work efficiency of users is improved.

## Description

### FIELD OF THE TECHNOLOGY

The present invention relates to a method for inserting and broadcasting slides in a document , and more particularly to a method for inserting slides which have broadcasting characteristic of the slides and are broadcast directly in a document, and a method for broadcasting slides inserted in a document.

### BACKGROUND OF THE INVENTION

1. Forms of inserted slides are quite simple. Content of the slides is only shown statically and does not have broadcast characteristics of slides such as animation effect, sound effect and so on. The broadcast document is not achieved the vivid effect. Therefore, the broadcast function of slides is not achieved in reality;

2. In prior art, the inserted slides are not broadcast directly in a document. Only be switched to the slide program by using mouse and/or keyboard, the slides can be broadcast in a full-screen mode (for example, only be switched to the PowerPoint program, the slides which are inserted in a word document of the Microsoft can be broadcast). And users can not see other content of the document because the slides are broadcast in the full-screen mode, which has caused great inconvenience to users;

3. After the slides is broadcast, a corresponding operation is needed to switch back to the character processing program if other parts beyond the slides are needed to see. The repeated switch operations make the broadcasting procedure extremely complicated. The broadcasting procedure becomes more complicated if the number of the inserted slides is large in a document. And when the slides are broadcast in the full-screen mode, the next slide needing to be broadcast can be chosen only if the current slide is finished broadcasting if the order of the broadcast needs to be changed. The operation is complicated and longer time is needed, which wastes the time, influences the work efficiency of the users, and brings great inconvenience to the users.

### SUMMARY OF THE INVENTION

The first purpose of the present invention is aimed at the deficiency in prior art that slides inserted in a document can not be broadcast directly and the slides do not have the broadcast characteristics, and provides a method for inserting slides in a document, which makes the slides inserted in the document have broadcast characteristics of slides and be broadcast directly.

The second purpose of the present invention is aimed at the deficiency in prior art that slides can not be broadcast directly with the broadcast characteristics in a document, and provides a method for broadcasting slides in a document. By using this method, the slides inserted in the document can be broadcast directly according to the broadcast characteristics of slides.

In order to realize the first purpose, the present invention provides a method for inserting slides in a document. The method includes the follow steps:

step 11, setting a file type of a slide file when inserting the slide file in a document;

step 12, extracting a file name, a file path, the file type and a file label array of the slide file, and storing them in a memory, wherein labels of chosen slides in the slide file are recorded orderly in the file label array; and

step 13, constructing a slide object according to the file name, the file path, the file type and the labels in the file label array, and inserting the slide object at a cursor position in the document.

In order to realize the second purpose, the present invention provides a method for broadcasting slides inserted in a document. The method includes the follow steps:

step 21, checking whether data of a file name, a file path, a file type and a file label array of a slide file labeled by a slide object exist in a memory according to information of broadcasting slides inserted by users, if the data do not exist in the memory, performing step 22, otherwise jumping to perform step 24;

step 22, judging whether the slide object is data generated by a same application program according to the file type of the slide object; if the slide object is the data generated by the same application program, performing step 23, otherwise jumping to perform step 24;

step 23, reading the data of the file name, the file path, the file type and the file label array of the slide file from a hard disk according to the file name, the file path and the file label array of the slide object; storing the data in the memory and performing step 25;

step 24, reading the data of the file name, the file path, the file type and the file label array of the slide file from a hard disk according to the file name, the file path and the file label array of the slide object; resolving the data, converting the data to corresponding data of the present application program, and further storing the corresponding data in the memory; and

step 25, reading the data of the file name, the file path, the file type and the file label array of the slide file from the memory and broadcasting the slide file according to the data.

What can be seen from the above technical scheme for inserting and broadcasting slides in a character processing document is that the present invention extracts the file name, the file path, the file type and the file label array of the slide file when the slides are inserted in a document, and stores them in a memory. When the slide file is broadcast, the present invention obtains some relevant information needed by broadcasting, such as the file name, the file path, the file type and the file label array and so on through the inserted slide object. Therefore, the slides content can be broadcast directly, and the broadcast characteristics such as the animation effect and sound effect have been realized. The operation is simple, and time for broadcasting the slides is saved, which improves the work efficiency of the users and facilitates the users greatly.

The present invention is further described in detail below through the detailed descriptions with reference to the drawings.

### BRIEF DESCRIPTION OF THE DRAWINGS

Figure 1 is a flow chart of a method for inserting slides in a document by using a paste/paste hyperlink manner according to the present invention;

Figure 2 is a flow chart of a method for inserting slides in a document by using an insert manner according to the present invention;

Figure 3 is a flow chart of a method for broadcasting slides in a document according to the present invention.

### DETAILED DESCRIPTION OF THE PREFERRED EMBODIMENTS

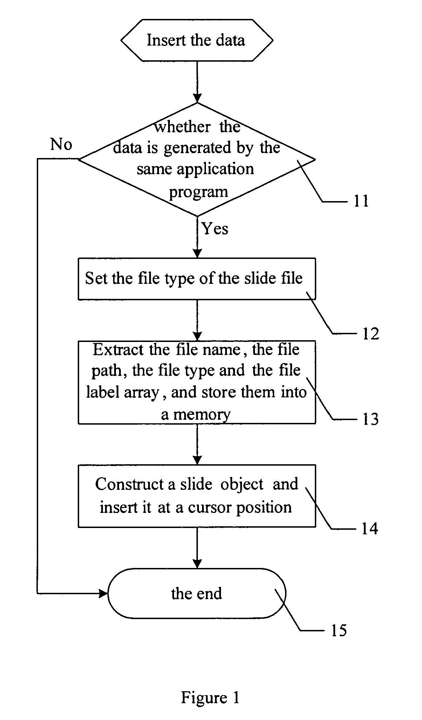

Referring to Figure 1, Figure 1 is a particular flow chart of a method for inserting slides in a document by using paste/paste hyperlink manner. The method performs the following steps:

step 11, the application program of the document, that is to say the current application program, judges whether the slide data is data generated by using the same application program when users insert slide data at a cursor position in a document by using the paste manner or the paste hyperlink manner, if the slide data is the data generated by using the same application program, performs step 12, otherwise jumps to perform step 15;

step 12, the current application program sets the file type of the slide file where the slide data are located to the slide file generated by the same application program;

step 13, a file name, a file path, a file type and a file label array are extracted and stored in a memory; herein, the file name is used to distinguish several slide files in the same document; the file path is used to record the path in a hard disk of this slide file; the file type is used to record that the slide file is generated by using the same application program or other application programs; and the file label array is used to locate the specific slides in the document; certainly, other relevant information of the slide file may also be stored in the memory;

step 14, a slide object is constructed according to the file name, the file path, the file type and the first label in the file label array, and pasted or pasted hyperlink at a cursor position in the document;

step 15, the end.

The slide object inserted by this method has all characteristics of a slide object in a slide program. For example, the slides may participate in character surround arrangement, the characters may be embedded in the slides, and the size of the slide may be changed and so on. Therefore, the slide object has its own broadcast characteristics such as animation effect and sound effect and so on, which achieves the vivid effect for broadcasting the document. And the slides are operated directly without needing to be switched to the application program of the slides when the users broadcast the slides. The operation switching back to the document after operation of the slides finishes is dispensed. The operation is simple, time is saved, and work efficiency of the users is improved.

When data of source slides are changed, corresponding slides inserted in the document will be changed accordingly if the slides are inserted by using a paste hyperlink manner. The users can update the slide data timely without needing to modify the slide data in the document. Especially, the same data need not to be modified repeatedly when the source slide is inserted in the document many times, which further simplifies the operation, saves time of the users, and facilitates the users greatly.

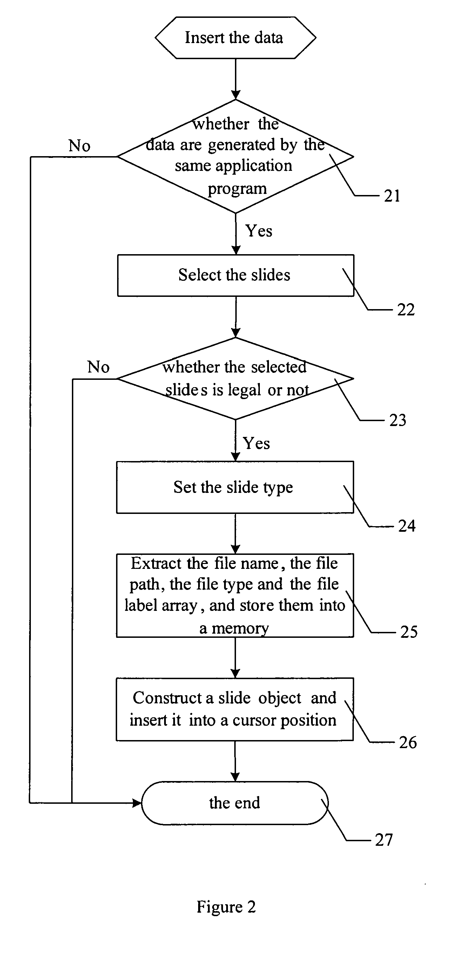

Referring to Figure 2, Figure 2 is a specific flow chart of a method for inserting slides in a document by using an insert manner according to the present invention; the method performs the following steps:

step 21, the application program of the document, that is to say the current application program, judges whether the slide file is data file generated by using the same application program when the users insert slides at a cursor position in a document, if the slide file is the slide file generated by using the same application program, performs step 22, otherwise jumps to perform step 23;

step 22, the current application program pop-ups selecting interface for users selecting the specific slides in the slide file. The users select one or more slides in the slide file, performs step 25;

step 23, the current application program resolves the slide file, and judges whether the slide file is legal or not, if the slide file is legal, performs step 24, otherwise jumps to perform step 27;

step 24, the current application program sets a file type of the slide file. That is to say the slide file is generated by the same application programs or other application programs;

step 25, a file name, a file path, the file type and a file label array are extracted and stored in a memory; herein, the file name is used to distinguish several slide files in the same document; the file path is used to record the path in a hard disk of this slide file; the file type is used to record that the slide file is generated by using the same application program or other application programs; the file label array is used to locate the particular slides in the document; certainly, other relevant information of the slide file may also be stored in the memory;

step 26, a slide object is constructed according to the file name, the file path, the file type and the first label in the file label array, and inserted at a cursor position in the document;

The slide object inserted by using this method has all characteristics of a slide object in a slide program. For example, the slides may participate in the character surround arrangement, the characters may be embedded in the slides, and the size of the slide may be changed and so on. Therefore, the slide object has its own broadcast characteristics such as animation effect and sound effect and so on, which achieves the vivid effect for broadcasting the document. And the slides are operated directly without needing to be switched to the application program of the slides when the users broadcast the slides. The operation switching back to the document after the operation of the slides finishes is dispensed. The operation is simple, time is saved , and work efficiency of the users is improved.

step 27, the end.

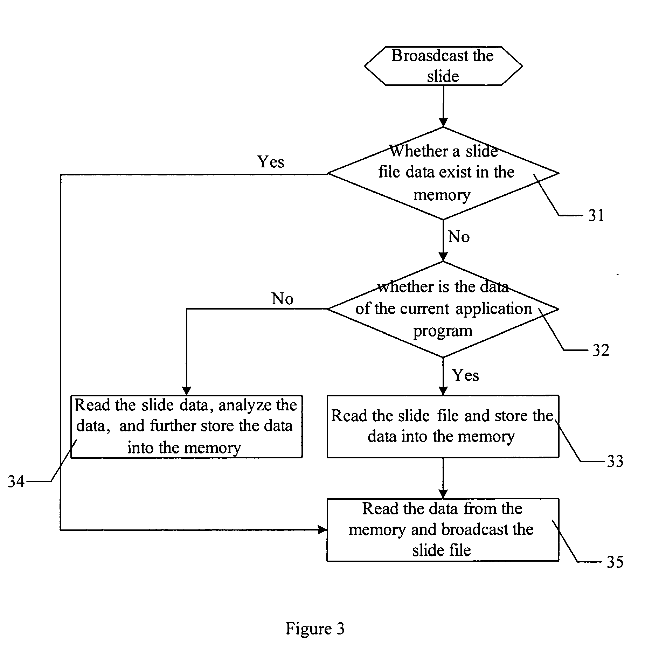

The slides can be broadcast directly according to the broadcast characteristics such as animation effect and sound effect and so on after inserting the slides in a document through the flows shown in Figure 1 and Figure 2. Referring to Figure 3, Figure 3 is a specific flow chart of a method for inserting slides in a document by using insert manner according to the present invention; the method performs the following steps:

step 31, the current application program checks whether data of a file name, a file path, a file type and a file label array of a slide file labeled by a slide object exist in a memory when the users transmit slide information in a broadcasting document to the current application program by mouse or keyboard; if the data do not exist in the memory, performs step 32, otherwise jumps to perform step 35;

step 32, the current application program judges whether the slide object is data generated by the same application program according to the file type of the slide object; if the slide object is the data generated by the same application program, performs step 33, otherwise jumps to perform step 34;

step 33, the current application program reads the data of the file name, the file path, the file type and the file label array of the slide file from a hard disk according to the file name, the file path and the file label array of the slide object, and stores the data in the memory, then performs step 35;

step 34, the current application program reads the data of the file name, the file path, the file type and the file label array of the slide file from the hard disk according to the file name, the file path and the file label array, resolves the data, converts the data to corresponding data of the present application program, and further stores the corresponding data in the memory;

step 35, the current application program reads the data of the file name, the file path, the file type and the file label array of the slide file from the memory and broadcasts the slide file according to the data. Herein, the particular procedure of broadcasting the slide file according to the data of the slide file is as follows:

step 351, the current application program judges the broadcasting area selected by the users according to operation of the users, such as whether the users hope to broadcast the slides according to the size of the slide object in the document or broadcast the slides in a full-screen mode. The current application program deletes data in the broadcasting area and loads screening platform components;

step 352, slides are obtained corresponding to the labels successively according to order of the labels in the file label array based on the data of the slide file and broadcast;

In the step 352, the current application program judges whether the label is the last label data in the file label array when broadcasting slides corresponding to each of the labels ends; if the label is not the last label data in the file label array, obtains the slide corresponding to the next label data and broadcasts, otherwise judges whether the slide file is demanded to broadcast in circle; if the slide file is demanded to be broadcast in circle, obtains the slide corresponding to the first label data in the file label array and broadcasts, otherwise, ends the broadcasting procedure.

Meanwhile, in the step 352, whether aside data are broadcast is judged according to the operation of the users when the slides corresponding to the labels are obtained and broadcast, if the aside data is broadcast, the current application program calls the aside data and broadcasts, otherwise ends the procedure of broadcasting the aside data. Additionally, in the step 352, whether the animation information is broadcast according to the operation of the users when the slides corresponding to the labels are obtained and broadcast; if the animation information is broadcast, the animation engine calls the corresponding animation data and broadcasts, otherwise ends the procedure of broadcasting the animation information data.

At any time of broadcasting the slides, the current application program detects whether the mouse signal or keyboard signal exists. Corresponding operation is carried out according to the keyboard signal or the mouse signal when the keyboard signal or the mouse signal exists. For example, the current application program withdraws from the procedure of broadcasting the slides when the signal of the ESC button on the keyboard is detected.

The slide object inserted by this method has all characteristics of a slide object in a slide procedure because the data of the file name, the file path, the file type and the file label array of the slide file are read from the memory and the slide file is broadcast according to the data, which equals to read the source slides. The slides may participate in character surround arrangement, the characters may be embedded in the slides, the size of the slide may be changed, and the slides own animation effect and sound effect and so on, which achieves the vivid effect for broadcasting the document. And the slides are operated directly without needing to be switched to the application program of the slides when the users broadcast the slides. The operation switching back to the document after the operation of the slide finishes is dispensed. The operation is simple, time is saved, and work efficiency of the users is improved.

Though illustration and description of the present disclosure have been given with reference to exemplary embodiments thereof, it should be appreciated by persons of ordinary skill in the art that various changes in forms and detail can be made without deviation from the spirit and scope of this disclosure, which are defined by the appended claims.

## Claims

1. A method for inserting slides in a document, comprising:
step 11, setting a file type of a slide file when inserting the slide file in a document;
step 12, extracting a file name, a file path, the file type and a file label array of the slide file, and storing them in a memory, wherein labels of chosen slides in the slide file are orderly recorded in the file label array; and
step 13, constructing a slide object according to the file name, the file path, the file type and the labels in the file label array, and inserting the slide object at a cursor position in the document.

2. The method according to claim 1, wherein the inserting the slide file in a document in the step 11 comprises:
inserting the slide file in the document by using a paste manner, a paste hyperlink manner or an insert manner.

3. The method according to claim 1, wherein the setting a file type of a slide file in the step 11 particularly comprises:
step 111, judging whether the slide file is data generated by a same application program; if the slide file is the data generated by the same application program, performing step 112, otherwise performing step 113;
step 112, setting the file type of the slide file to a slide file generated by the same application program, and performing step 13;
step 113, resolving the slide file and judging whether the slide file is legal; if the slide file is legal, performing step 124, otherwise performing step 15;
step 114, setting the file type of the slide file to a slide file generated by other application programs.

4. A method for broadcasting slides inserted by using the methods according to any one of claims 1 to 3 in a document, comprising:
step 21, checking whether data of a file name, a file path, a file type and a file label array of a slide file labeled by a slide object exist in a memory according to information of broadcasting slides input by users; if the data do not exist in the memory, performing step 22, otherwise jumping to perform step 24;
step 22, judging whether the slide object is data generated by a same application program according to the file type of the slide object; if the slide object is the data generated by the same application program, performing step 23, otherwise jumping to perform step 24;
step 23, reading the data of the file name, the file path, the file type and the file label array of the slide file from a hard disk according to the file name, the file path and the file label array of the slide object; storing the data in the memory, and then performing step 25;
step 24, reading the data of the file name, the file path, the file type and the file label array of the slide file from a hard disk according to the file name, the file path and the file label array of the slide object; resolving the data, converting the data to corresponding data of the present application program, and further storing the corresponding data in the memory; and
step 25, reading the data of the file name, the file path, the file type and the file label array of the slide file from the memory, and broadcasting the slide file according to the data.

5. The method according to claim 4, wherein step 25 particularly comprises:
step 251, judging a broadcasting area of the slides, deleting the data in the broadcasting area, and loading screening platform components; and
step 252, obtaining the slides corresponding to the labels successively according to order of the labels in the file label array based on the data of the file name, the file path and the file label array, and broadcasting the slides.

6. The method according to claim 5, wherein the broadcasting the slides in the step 252 particularly comprises:
judging whether a label is the last label data in the file label array when broadcasting a slide corresponding to the label ends; if the label is not the last label data in the file label array, obtaining a slide corresponding to the next label data and broadcasting, otherwise judging whether the slide file is demanded to be broadcast in circle; if the slide file is demanded to be broadcast in circle, obtaining the slide corresponding to the first label data in the file label array and broadcasting, otherwise, ending.

7. The method according to claim 5, wherein the broadcasting the slides in the step 252 particularly comprises:
judging whether aside data is broadcast; if the aside data are broadcast, calling the aside data and broadcasting, otherwise ending a procedure of broadcasting the aside data.

8. The method according to claim 5, wherein the broadcasting the slides in the step 252 particularly comprises:
judging whether animation information are broadcast; if the animation information is broadcast, calling, by an animation engine, corresponding animation data and broadcasting, otherwise ending a procedure of broadcasting the animation information data.
